# EUROPEAN PATENT APPLICATION

(11) **EP 3 623 081 A1**
(43) Date of publication of application: **18.03.2020**
(21) Application number: 19188452.7
(22) Date of filing: 25.07.2019
(51) Int. Cl.: B22F 3/105, A61C 13/00, B23Q 3/06, B23Q 3/18, B33Y 80/00, B33Y 10/00, B33Y 40/00, B29C 64/153, B29C 64/40, B29C 64/188, B28B 1/00, B25B 11/00

(54) **RE-MACHINING PROCESS OF A SEMI-FINISHED PRODUCT OBTAINED BY MEANS OF SELECTIVE LASER MELTING, GRIPPING EQUIPMENT AND SEMI-FINISHED PRODUCT HAVING SHAPE ELEMENTS CORRESPONDING TO THE SHAPE ELEMENT OF THE GRIPPING EQUIPMENT**

(30) Priority: 06.08.2018 IT 201800007886
(71) Applicant: Sisma S.p.A., 36013 Piovene Rocchette (Vicenza) (IT)
(72) Inventor: IACOVELLA, Federico, 36013 Piovene Rocchette (IT)
(74) Representative: Lissandrini, Marco

(57) **Abstract**

A re-machining process of a semi-finished product (100) obtained by means of selective laser melting provides preparing, during the selective laser melting, a plurality of centring arms (103a), each comprising a first portion (4a) of conical coupling means, and a plurality of fixing arms (103b), each comprising a fixing eyelet (104). The process also further provides making a gripping equipment (1) provided with a plurality of second portions (4b) of the conical coupling means and a plurality of fixing holes (3). The semi-finished product (100) is associated with the gripping equipment (1), coupling at least a first portion (4a) of the conical coupling means of the semi-finished product (100) with a respective second portion (4b) of the conical coupling means of the gripping equipment (1) and superimposing at least one fixing eyelet (104) to a respective fixing hole (3). A threaded fixing member is introduced into a cylindrical seat (105) of the fixing eyelet (104) and screwed into the fixing hole (3) before re-machining the semi-finished product (100) on a removal machine comprising the gripping equipment (1).

## Description

The present invention relates to a re-machining process of a semi-finished product obtained by means of selective laser melting.

The present invention also relates to a gripping equipment and a semi-finished product obtained by means of selective laser melting.

Selective laser melting technology, or SLM, is an additive manufacturing technology since it is based on the layered addition of metallic powders through laser fusion.

This technology is based on the selective micro-melting, by means of a laser beam, of a layer of metallic powder of controlled particle size in order to make thin layers of superimposed melted/solidified metal. Proceeding layer by layer, it is possible to obtain three-dimensional objects of any shape and/or geometry.

Selective laser melting is used in numerous industrial sectors in order to produce objects, also of a complex shape, cheaper and faster than the normal metal melting processes. Selective laser melting finds particular application in the field of jewellery, watches, and dentures, as well as in the technical field of prototyping.

In some of the reference technical fields, selective laser melting does not produce a finished three-dimensional object but a semi-finished product that requires further processing in a removal machine, for example a milling cutter, to obtain certain surface characteristics and/or dimensional accuracy.

The re-machining of the semi-finished product obtained by means of selective laser melting is currently unreliable and quite complex, thus requiring rather long preparation times and often unsatisfactory results.

For this purpose it is known from EP3095538, in the name of the same Applicant, to provide a gripping equipment and a relative semi-finished product which are coupled to each other by means of a shape coupling through which the semi-finished product is fixed to the gripping equipment using threaded members. This solution also has drawbacks due to the coupling errors caused by dimensional tolerances that, as a result of fixing with the threaded members through the same shape coupling, induce deformations and mechanical stresses in the semi-finished product.

In this context, the technical task underpinning the present invention is to provide a re-machining process of a semi-finished product obtained by means of selective laser melting, a gripping equipment and a semi-finished product obtained by means of selective laser melting which obviate the drawbacks of the prior art cited above.

With reference to the present description and the relative claims, the term "semi-finished product" is intended as the product of the selective laser melting and can comprise a single three-dimensional object designed to make the finished product or two or more three-dimensional objects each designed to make a certain finished product. The semi-finished product as a whole is provided with centring and fixing arms adapted to be respectively coupled and fixed to a gripping equipment. In the case wherein the semi-finished product comprises a plurality of three-dimensional objects, interconnection arms are provided to rigidly unite the various three-dimensional objects and form a "network" of three-dimensional objects by exploiting all the available space in an optimal way.

In particular, an object of the present invention is to provide a re-machining process of a semi-finished product obtained by means of selective laser melting, a gripping equipment and a semi-finished product obtained by means of selective laser melting able to carry out the re-machining operations of the semi-finished product itself quickly and reliably, such as to allow achieving high levels of precision and/or accuracy in the subsequent processing.

A further object of the present invention is to provide a re-machining process of a semi-finished product obtained by means of selective laser melting, a gripping equipment and a semi-finished product obtained by means of selective laser melting able to achieve net improvements in the surface quality, precision and dimensional accuracy.

The technical task mentioned and the specified objects are substantially achieved by a re-machining process of a semi-finished product obtained by means of selective laser melting, a gripping equipment and a semi-finished product obtained by means of selective laser melting that allow differentiating from a structural point of view the shape coupling and its fixing through threaded members between the semi-finished product and the gripping equipment. In particular, the technical task mentioned and the specified objects are substantially achieved by a re-machining process of a semi-finished product obtained by means of selective laser melting, a gripping equipment and a semi-finished product obtained by means of selective laser melting, comprising the technical characteristics described in one or more of the appended claims. The dependent claims correspond to different embodiments of the invention.

Still more in particular, according to a first aspect, the present invention relates to a re-machining process of a semi-finished product obtained by means of selective laser melting. According to this process it is provided to arrange, during the selective laser melting, a plurality of centring arms and a plurality of fixing arms of the semi-finished product.

Each centring arm is arranged so as to comprise, preferably at an end thereof, a first portion of conical coupling means.

Each fixing arm is arranged so as to comprise, preferably at an end thereof, a fixing eyelet defining a cylindrical seat adapted to receive a threaded fixing member.

The process also further provides making a gripping equipment provided with a plurality of second portions of the conical coupling means and a plurality of fixing holes. Each fixing hole is adapted to receive a corresponding threaded fixing member.

The semi-finished product is associated with the gripping equipment, coupling at least a first portion of the conical coupling means of the semi-finished product with a respective second portion of the conical coupling means of the gripping equipment and superimposing at least one fixing eyelet to a respective fixing hole. Introducing the threaded fixing member in the cylindrical seat and screwing it into the fixing hole, the semi-finished product is fixed to the gripping equipment to proceed to the re-machining step on a removal machine comprising the same gripping equipment.

The use of conical coupling means which is structurally distinct from the fixing holes and from their fixing eyelets limits the deformations and mechanical stresses in the semi-finished product, making it possible to ensure optimum results in terms of precision and reliability.

Preferably, the step of making the gripping equipment is carried out directly in a removal machine,

Starting from a gripping equipment made directly in the removal machine, it is possible to ensure a perfect centring of the gripping equipment on the machine that, in fact, self-builds the gripping equipment.

In accordance with another aspect of the invention, the process comprises the further steps:
- carrying out a first re-machining operation on a first surface of the semi-finished product;
- rotating the gripping equipment by a prefixed angle;
- carrying out a second re-machining operation on a second surface of the semi-finished product, for example, an opposite surface to said first surface.

Preferably, the rotation of the equipment can result in an overturning of the gripping equipment of 180°. In this way, it is possible to carry out a re-machining operation on the opposite sides, or faces, of the semi-finished product, without having to dismount it from the gripping equipment. Advantageously, therefore, the process according to the invention allows carrying out the re-machining of the semi-finished product in its entirety, i.e. also on opposite sides, easily and quickly. Alternatively, rotations of less than 180° are possible, for example comprised between 90° and 105°.

In accordance with a possible further aspect, the present invention also relates to a gripping equipment preferably made directly in a removal machine and comprising a plurality of fixing holes. Each fixing hole is adapted to receive a threaded fixing member. Central conical seats are also provided. Each central conical seat is surrounded by an annular conical protrusion. Alternatively, central conical protrusions are provided. Each central conical protrusion is surrounded by an annular conical seat.

In accordance with a still further aspect, the present invention relates to a semi-finished product obtained by means of selective laser melting comprising a plurality of centring arms and a plurality of fixing arms. Each centring arm comprises, preferably at one end thereof, a central conical protrusion surrounded by an annular conical seat. Alternatively each centring arm comprises, preferably at one end thereof, a central conical seat surrounded by an annular conical protrusion. Furthermore each fixing arm comprises, preferably at an end thereof, a fixing eyelet defining a cylindrical seat adapted to receive a threaded fixing member.

Further characteristics and advantages of the present invention will more fully emerge from the indicative, and thus non-limiting description of a preferred but not exclusive embodiment of a re-machining process of a semi-finished product obtained by means of selective laser melting, a gripping equipment and a semi-finished product obtained by means of selective laser melting.

This description will be set out below with reference to the appended drawings, which are provided solely for indicative and therefore non-limiting purposes, in which:
- figure 1 shows a schematic perspective view of a gripping equipment according to the present invention;
- figure 2 is a schematic front view of the gripping equipment of figure 1;
- figure 3 is a sectional view, according to the line III-III of figure 2;
- figure 4 is a schematic perspective view of a semi-finished product obtained by means of selective laser melting according to the present invention;
- figure 5 is a schematic front view of the semi-finished product of figure 4;
- figure 6A and figure 6B are a schematic sectional view of respective enlarged details of the semi-finished product of figure 5;
- figure 7 and figure 8 are respectively a schematic perspective view and a plan view of a semi-finished product coupled to a gripping equipment.

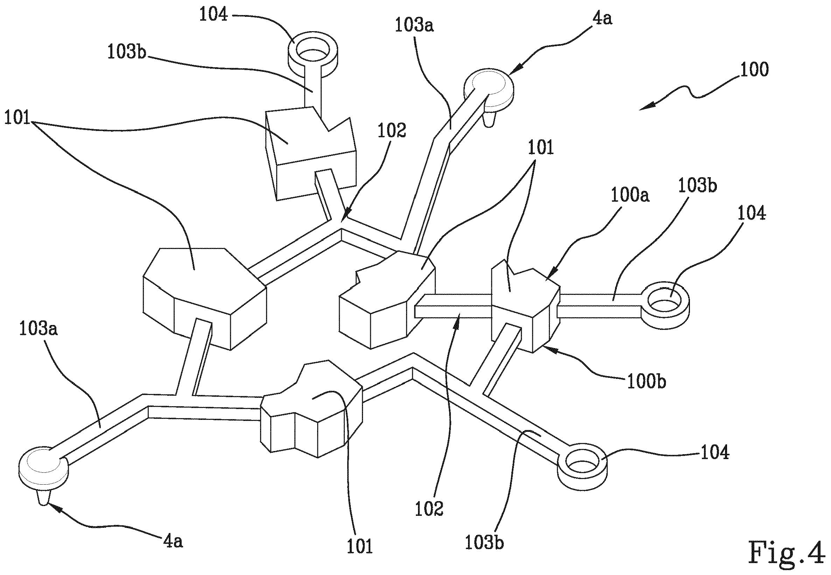

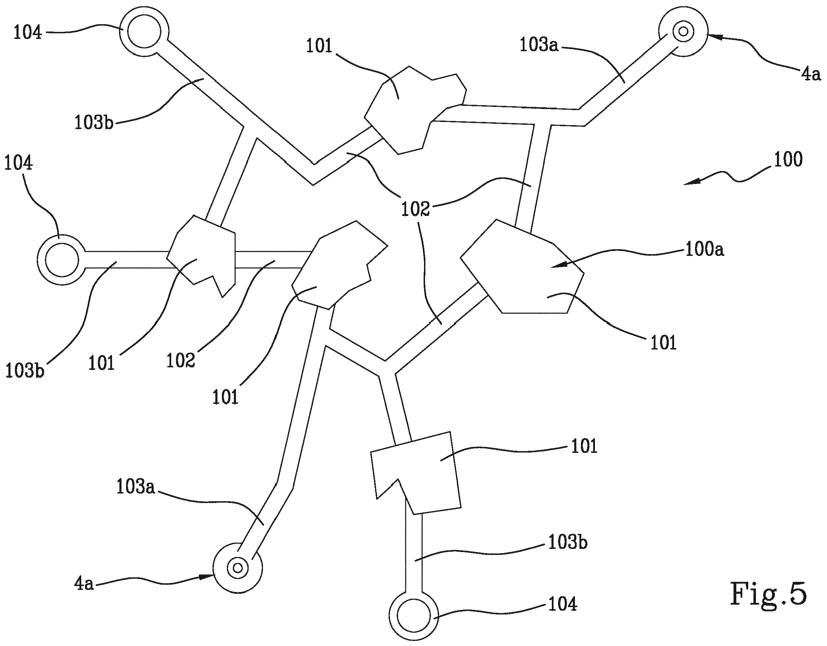

Figures 4-5 show an example of semi-finished product 100. Such semi-finished product comprises at least one three-dimensional object 101, in particular a plurality of three-dimensional objects 101 each adapted to make a finished product. Each three-dimensional object 101 can be different from the others in shape and/or size. The shape, size and type of the finished product are variable, in particular depending on the field of use. In other words, the semi-finished product 100 corresponds to the product of the selective laser melting and can comprise a single three-dimensional object designed to make the finished product or two or more three-dimensional objects 101 each designed to make a certain finished product.

In the dental sector the three-dimensional objects can be for example dentures. In the gold sector the three-dimensional objects can be any component of jewellery or the like. In the watch sector, the three-dimensional objects can be any component of the working mechanism.

The semi-finished product 100, in particular when it comprises a plurality of three-dimensional objects 101, has a plurality of interconnection arms 102 arranged between the three-dimensional objects 101 to create a lattice structure. The shape and the section of the interconnection arms are defined in particular based on the strength characteristics necessary during the processing operations on the removal machine, for example, the section of the interconnection arms is trapezoidal. In particular, the section of the interconnection arms is selected among those which allow obtaining rigidity and stability with lower engaged volumes and therefore saving material.

The interconnection arms allow rigidly uniting the various three-dimensional objects 101 and forming a "network" of three-dimensional objects by exploiting all the available space in an optimal way.

The semi-finished product 100 further comprises a plurality of centring arms 103a and a plurality of fixing arms 103b.

Each centring arm 103a is arranged so as to comprise, preferably at an end thereof, a first portion 4a of conical coupling means.

Each fixing arm 103b comprises, preferably at an end thereof, a fixing eyelet 104 defining a cylindrical seat 105 adapted to receive a threaded fixing member, not shown, for example a screw.

The interconnection arms 102 and/or centring arms 103a and/or fixing arms 103b can be made hollow inside with one or more openings to allow the discharge of internal dust. The shape and the section of the arms are defined in particular based on the strength characteristics necessary during the processing operations on the removal machine, for example the section of the arms is trapezoidal. In particular, the section of the arms is selected among those which allow obtaining rigidity and stability with lower engaged volumes and therefore saving material.

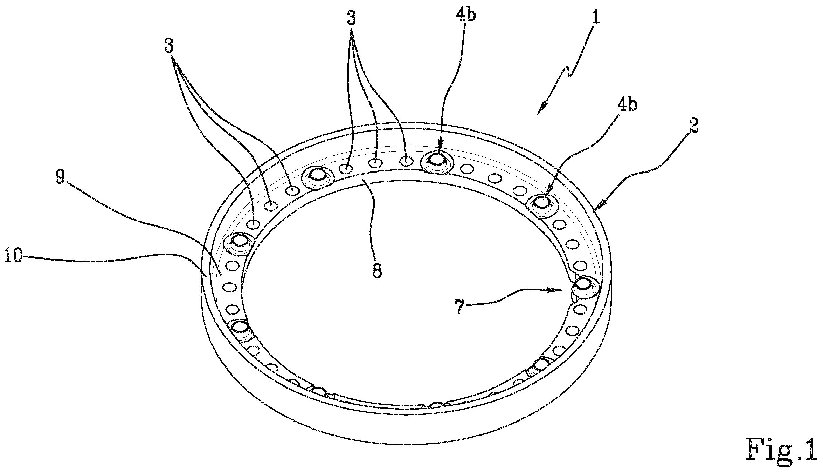

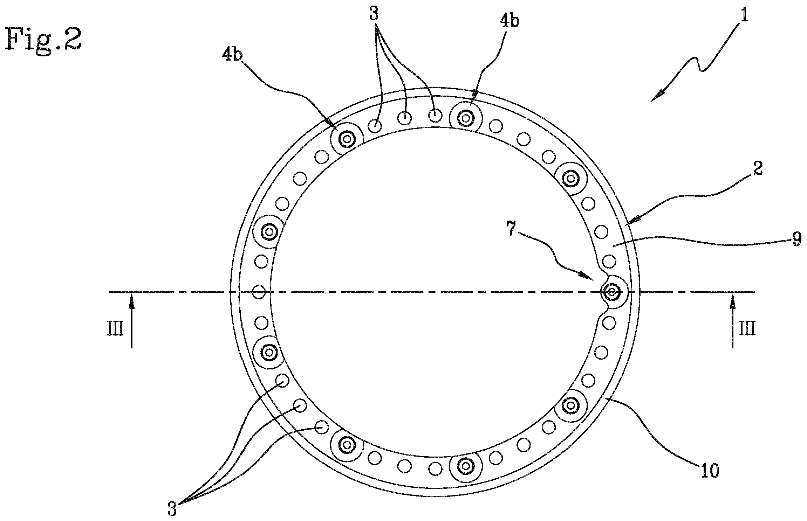

With reference to figures 1-3, the number 1 is used to indicate an overall gripping equipment for a re-machining process of a semi-finished product 100 obtained by means of selective laser melting.

The gripping equipment 1 is preferably made directly in a removal machine, in particular a milling cutter, not shown, through the processing of a solid metal disc previously fixed in the machine. In other words, the machine self-builds the gripping equipment 1 by ensuring the perfect centring of the semi-finished product.

The gripping equipment 1 has a body 2 defining a closed perimeter. In particular, the body 2 has an axially symmetrical annular shape, preferably circular.

Alternatively, the gripping equipment 1 can have a body defining an open perimeter, for example "C"-shaped or in the form of a semi-circumference.

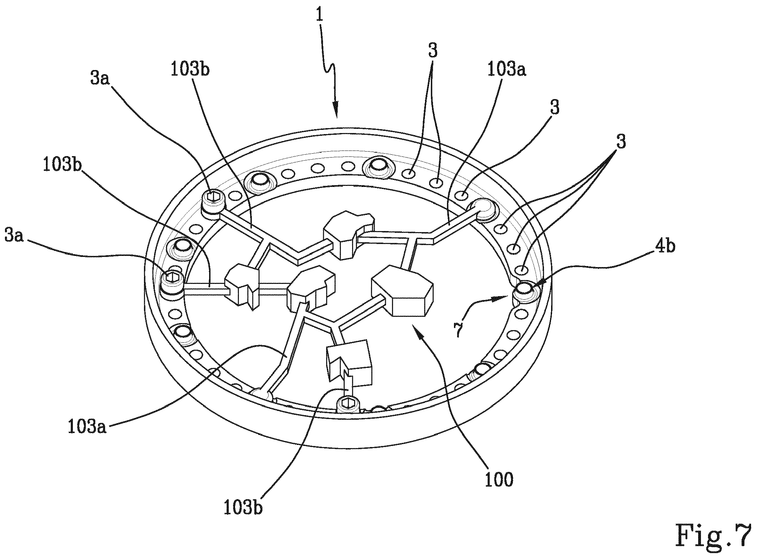

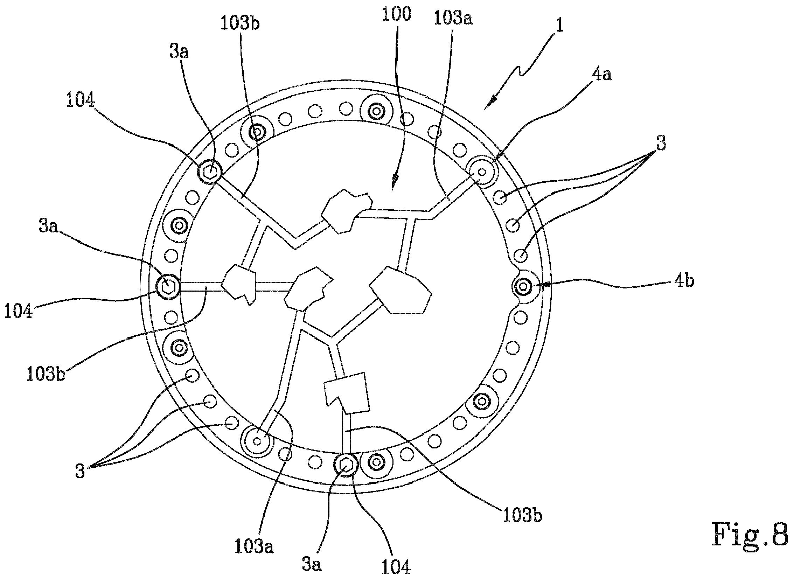

The gripping equipment 1 has a plurality of fixing holes 3. Each fixing hole 3 is adapted to receive a corresponding threaded fixing member 3a, for example a screw. The fixing eyelets 104 of the semi-finished product 100 can overlap respective fixing holes 3 so as to be coaxial to receive the threaded fixing member, as shown in figure 7 or 8.

The gripping equipment 1 comprises a plurality of second portions 4b of the conical coupling means, complementary to the first portions 4a of the semi-finished product 100. The first portion 4a of the conical coupling means is adapted to cooperate with the second portion 4b of the conical coupling means for centring the semi-finished product 100 on the gripping equipment 1.

With reference to a body 2 defining a closed or open perimeter, the fixing holes 3 and the second portions 4b can be arranged along such perimeter. In accordance with a possible embodiment, in particular in the case wherein the body 2 defines a closed perimeter, the equipment 1 can comprise a support bridge, not shown, which crosses the closed perimeter. The support bridge can also be provided with a plurality of further fixing holes and/or further second portions 4b.

Preferably the arrangement of the fixing holes 3 and of the second portions 4b is repetitive along the perimeter of the gripping equipment 1, for example as per the accompanying figures in which a module with three fixing holes 3 and a second portion 4b is repeated, for example, along the perimeter of the gripping equipment 1.

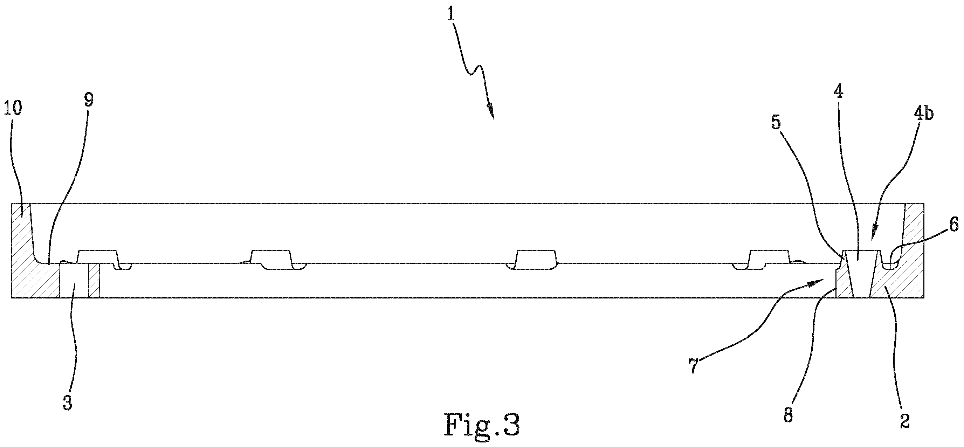

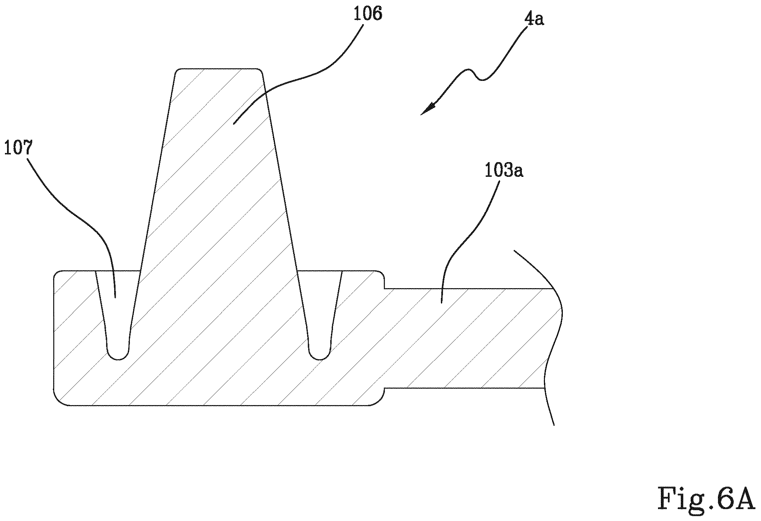

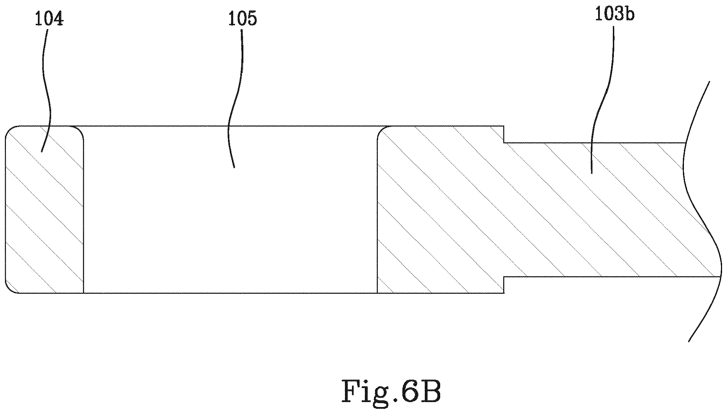

With reference to figure 6A, each first portion 4a of the conical coupling means of the semi-finished product 100 comprises a central conical protrusion 106 and an annular conical seat 107 arranged about the central conical seat 106. Similarly, with reference to figure 3, each second portion 4b of the conical coupling means of the gripping equipment 1 comprises a central conical seat 4, adapted to receive the central conical protrusion 106 of the semi-finished product 100, and an annular conical protrusion 5 arranged about the central conical seat 4. The annular conical seat 107 of the semi-finished product 100 is adapted to receive the annular conical protrusion 5 of the gripping equipment 1.

An annular groove 6 can be made at the base of each annular conical protrusion 5 and in a radially outer position thereto in order to avoid interference.

According to an alternative embodiment not shown, the shape of the first and the second portion of the conical coupling means is reversed. Each second portion 4b of the conical coupling means of the gripping equipment 1 comprises a central conical protrusion and an annular conical seat arranged about the central conical protrusion. Each first portion 4a of the conical coupling means of the semi-finished product 100 comprises a central conical seat adapted to receive the central conical protrusion of the gripping equipment 1. An annular conical protrusion is arranged about the central conical seat of the semi-finished product 100. The annular conical seat of the gripping equipment 1 is adapted to receive the annular conical protrusion of the semi-finished product 100.

An annular groove can be made at the base of each annular conical protrusion and in a radially outer position thereto in order to avoid interference.

In accordance with a possible embodiment, the gripping equipment 1 comprises a reference 7 for fixing the semi-finished product 100. Preferably, the reference 7 is made by shaping a lateral wall 8 of the gripping equipment 1 about one of the second portions 4b. In particular, the reference 8 is made through a polygonal shaping about a fixing hole 3.

In accordance with the illustrated embodiment, the gripping equipment 1 comprises an annular plate 9 which defines the closed perimeter and on which the fixing holes 3 and the second portions 4b are made.

The gripping equipment 1 also comprises an outer wall 10 which delimits the plate 9 and extends perpendicularly thereto for a section having a greater dimension than the thickness of the plate 9. Preferably, the reference 7 is made by shaping an inner lateral wall 8 of the gripping equipment 1, arranged on the side opposite the outer wall 10.

The gripping equipment 1 and the semi-finished product 100 thus made allow reliably and accurately performing a re-machining process of the semi-finished product obtained by means of selective laser melting.

According to this re-machining process, it is provided to prepare the centring arms 103a and the fixing arms 103b of the semi-finished product 100 during the selective laser melting. Furthermore, it is provided to make, preferably directly in the removal machine, the gripping equipment 1 in accordance with what has been previously described.

The semi-finished product 100 is associated with the gripping equipment 1, coupling at least a first portion 4a of the conical coupling means of the semi-finished product 100 with a respective second portion 4b of the conical coupling means of the gripping equipment 1 and superimposing at least one, preferably all the fixing eyelets 104 to a respective fixing hole 3.

The threaded fixing members 3a are inserted in respective cylindrical seats 105 and screwed into the respective fixing holes 3.

Finally the semi-finished product 100 is re-machined on a removal machine comprising the gripping equipment 1.

The coupling and centring of the semi-finished product on the gripping equipment is carried out by the conical coupling means while the fixing by means of the threaded fixing members takes place at the fixing holes 3 and the corresponding fixing eyelets 104 structurally distinct from the conical coupling means so as to not induce deformations and mechanical stresses in the semi-finished product. Advantageously, by coupling at least two, preferably all, of the first portions 4a of the conical coupling means of the semi-finished product 100 with the respective second portions 4b of the conical coupling means of the gripping equipment 1, it is possible to guarantee the uniqueness of the positioning between the gripping equipment 1 and the semi-finished product 100.

In addition, the gripping equipment 1 allows carrying out the re-machining of opposite surfaces of the semi-finished product 100.

After having carried out a first re-machining operation on a first surface 100a of the semi-finished product 100, the gripping equipment can be rotated by a prefixed angle, in such a way as to make accessible a second surface 100b, for example, an opposite surface to the first surface 100a. Subsequently it is therefore possible to carry out a second re-machining operation on the second surface 100b of the semi-finished product 100,

For example the rotation of the equipment can take place by overturning the gripping equipment of 180°. Alternatively, the prefixed angle can be less than 180°, for example comprised between 90° and 105°. In this way, it is advantageously possible to minimise the transfer movements of the re-machining tool, which can simply move back far enough to allow the rotation of the gripping equipment and can then immediately begin processing, with obvious advantages in terms of productivity and efficiency.

## Claims

1. A re-machining process of a semi-finished product (100) obtained by means of selective laser melting, comprising the steps of:
- arranging, during the selective laser melting process, a plurality of centring arms (103a) and a plurality of fixing arms (103b) of said semi-finished product (100), wherein each centring arm (103a) is arranged so as to comprise, preferably at an end thereof, a first portion (4a) of conical coupling means and wherein each fixing arm (103b) is arranged so as to comprise, preferably at an end thereof, a fixing eyelet (104) defining a cylindrical seat (105) adapted to receive a threaded fixing member;
- making a gripping equipment (1), preferably directly in a removal machine, said gripping equipment (1) being provided with a plurality of second portions (4b) of the conical coupling means and a plurality of fixing holes (3), wherein each fixing hole (3) is adapted to receive a corresponding threaded fixing member;
- associating said semi-finished product (100) to the gripping equipment (1) by coupling at least a first portion (4a) of the conical coupling means of the semi-finished product (100) to a respective second portion (4b) of the conical coupling means of the gripping equipment (1) and superposing at least one fixing eyelet (104) to a respective fixing hole (3);
- introducing said threaded fixing member into said cylindrical seat (105) and screwing the threaded fixing member into said fixing hole (3);
- re-machining said semi-finished product (100) on a removal machine comprising said gripping equipment (1).

2. The re-machining process according to claim 1, comprising the sub-steps of:
- carrying out a first re-machining operation on a first surface (100a) of the semi-finished product (100);
- rotating the gripping equipment (1) by a prefixed angle;
- carrying out a second re-machining operation on a second surface (100b) of the semi-finished product, for example an opposite surface to said first surface (100a).

3. The re-machining process according to claim 1 or 2, wherein said first portion of the conical coupling means of the semi-finished product (100) comprises a conical protrusion and said second portion of the conical coupling means of the gripping equipment (1) comprises a conical seat adapted to receive said conical protrusion, or wherein said second portion of the conical coupling means of the gripping equipment (1) comprises a conical protrusion and said first portion of the conical coupling means of the semi-finished product (100) comprises a conical seat adapted to receive said conical protrusion.

4. The re-machining process according to claim 1 or 2, wherein each first portion (4a) of the conical coupling means of the semi-finished product (100) comprises a central conical protrusion (106) and an annular conical seat (107) arranged about said central conical protrusion (106) and wherein each second portion (4b) of the conical coupling means of the gripping equipment (1) comprises a central conical seat (4) adapted to receive said central conical protrusion (106) of the semi-finished product (100) and an annular conical protrusion (5) arranged about said central conical seat (4), said annular conical seat (107) of the semi-finished product (100) being adapted to receive said annular conical protrusion (5) of the gripping equipment (1).

5. The re-machining process according to claim 1 or 2, wherein each second portion of the conical coupling means of the gripping equipment (1) comprises a central conical protrusion and an annular conical seat arranged about said central conical protrusion and wherein each first portion of the conical coupling means of the semi-finished product (100) comprises a central conical seat, adapted to receive said central conical protrusion of the gripping equipment (1), and an annular conical protrusion arranged about said central conical seat, said annular conical seat of the gripping equipment (1) being adapted to receive said central conical protrusion of the semi-finished product (100).

6. The re-machining process according to claim 4 or 5, comprising a step of making an annular groove (7) at the base of each annular conical protrusion (6) and in a radially external position thereof.

7. The re-machining process according to one or more of the preceding claims, wherein the step of making said gripping equipment (1) comprises a step of shaping a lateral wall (8) of the gripping equipment (1) about a second portion (4b) of the conical coupling means, preferably generating a polygonal shaping, in order to make a reference (7) and wherein the step of associating the semi-finished product to the gripping equipment (1) comprises positioning the semi-finished product with respect to said reference (7).

8. A gripping equipment (1) for a re-machining process of a semi-finished product (100) obtained by means of selective laser melting, wherein said gripping equipment (1) comprises:
a plurality of fixing holes (3), each fixing hole (3) being adapted to receive a threaded fixing member, and
a plurality of central conical seats (4), each central conical seat (4) being surrounded by an annular conical protrusion (5), or a plurality of central conical protrusions, each central conical protrusion being surrounded by an annular conical seat.

9. The gripping equipment (1) according to claim 8, comprising a polygonal shaping of a lateral wall (8) of the gripping equipment (1), said polygonal shaping being adapted to make a reference (7) and being made about one of the annular conical protrusions (5), or one of the annular conical seats.

10. The gripping equipment (1) according to claim 8 or 9, comprising a body (2) defining a closed perimeter, said fixing holes (3) and said annular conical protrusions (5) or said annular conical seats being arranged along said closed perimeter.

11. The gripping equipment (1) according to claim 8 or 9, comprising a body (2) defining an open perimeter, said fixing holes (3) and said annular conical protrusions (5) or said annular conical seats being arranged along said open perimeter.

12. A semi-finished product (100) obtained by means of selective laser melting and adapted to engage with a gripping equipment (1) in accordance with claim 8, comprising a plurality of centring arms (103a) and a plurality of fixing arms (103b),
wherein each centring arm (103a) comprises, preferably at an end thereof, a central conical protrusion (106) surrounded by an annular conical seat (107) or a central conical seat surrounded by an annular conical protrusion, and wherein each fixing arm (103b) comprises, preferably at an end thereof, a fixing eyelet (104) defining a cylindrical seat (105) adapted to receive a threaded fixing member.
